# EUROPEAN PATENT SPECIFICATION

(11) **EP 3 936 716 B1**
(45) Date of publication and mention of the grant of the patent: **22.11.2023**
(21) Application number: 21181476.9
(22) Date of filing: 24.06.2021
(51) Int. Cl.: F03D 9/19

(54) **WIND PARK WITH WIND TURBINE GENERATORS HAVING REDUCED INVERTER CAPACITY**
WINDPARK MIT WINDTURBINENGENERATOREN MIT REDUZIERTER WECHSELRICHTERKAPAZITÄT
PARC ÉOLIEN COMPRENANT DES GÉNÉRATEURS D'ÉOLIENNE AYANT UNE CAPACITÉ D'ONDULEUR RÉDUITE

(30) Priority: 10.07.2020 DK PA202070480; 10.07.2020 DK PA202070481
(43) Date of publication of application: 12.01.2022
(73) Proprietor: Vattenfall AB, 169 79 Solna (SE)
(72) Inventor: HJORT, Thomas, 7120 Vejle Ø (DK); KADUREK, Petr, 6700 Esbjerg (DK); SANGSTER, Michael, 6700 Esbjerg (DK); KORDKHEILI, Reza Ahmadi, 7100 Vejle (DK); HOFFMANN, Alfred, 6700 Esbjerg (DK)
(74) Representative: Zacco Denmark A/S

(56) References cited:
- EP-A1- 2 492 504
- US-A1- 2015 069 836
- US-B1- 7 471 010

## Description

### Field of disclosure

The present disclosure relates to a wind farm, comprising a plurality of wind turbine generators (WTG). Each wind turbine generator comprises a rotor having one or more blades, an electrical generator driven by said rotor for converting rotation thereof into electrical power, a power converter for converting power from the electrical generator, including a DC-link, and a power consuming arrangement being powered from said DC-link.

A document disclosing a prior art system is e.g. US 7 471 010 B1.

### Background

The number of new wind farms comprising a plurality of wind turbine generators (WTG) is continuing to grow and existing wind farms, where expedient, are maintained and updated. The operation of the wind farms and the wind turbine generators are continuously improved for increased energy production from each WTG and the wind farms as a whole.

It has been a constant object in the development of wind power to improve the profitability of wind farms by improving the financial gain made from the investment in erecting the wind farm.

Forecasts and optimization of the operation of the WTGs relying on large amounts of data and processing hereof are well established elements of operating the WTGs for improved production in consideration of not compromising the lifespan of the WTGs in particular the blades. Efforts are also made in increasing the nominal production capacity of the WTGs in order to lower the installation costs per installed MW production capacity and in further standardizing various components used in wind farms across different WTG platforms in order to improve competition conditions for producers of components and thereby minimize production costs of the wind farms.

### Description of the disclosure

The present disclosure relates to a wind farm according to claim 1.

A power consumption arrangement is provided in each of said plurality of wind turbines and being adapted for being powered by direct current power from the DC-link. The power consumption arrangement could include that each of the plurality of wind turbine generators may comprise equipment for production of desalinated water to be used e.g. for irrigation or drinking water, equipment for storage of electric energy in electric batteries or other types of energy storage, equipment for production of liquid ammonia, equipment for production of liquid gas, such as liquid air, liquid oxygen or liquid nitrogen. By providing such power consumption arrangement, which in a first aspect of the present disclosure is an electrolyzer arrangement for production of hydrogen and in a second aspect of the present disclosure is a data processing centre having one or more data processing units connected to a data communication network and configured to receive, process, store, and transmit data over the data communication network, the energy loss in the power inverter is reduced, since at least a sizable part of the power for the power consumption arrangement is drawn from the DC-link. Furthermore, the nominal power capacity of the power inverter can be reduced, which lower the installation costs per installed MW production capacity. The term nominal capacity is also known as nameplate capacity of equipment, such as a power inverter or an electrical generator. Further wind turbine generators of the wind farm may feed electrical power to the power consumption arrangements of one or more of the plurality of wind turbine generators comprising such arrangements.

This is particularly preferred that the maximal power consumption of the data processing centre constitutes at least 10%, such as at least 30% or even more than 50% of the nominal power capacity of the electrical generator of the individual wind turbine generator in which the data processing centre is installed.

In a preferred aspect, each of the plurality of wind turbine generators of the wind farm comprises such electrolyzer arrangement as well as such data processing centre, which further reduced the required nominal power capacity of the power inverter, so that it in such setup preferably constitutes no more than 40%, preferably no more than 30%, such as in the range of 10 to 25%, of the nominal power capacity of the electrical generator of that wind turbine generator.

The wind farm further comprising in a preferred arrangement a data communication network connecting the data processing centres of each of the plurality of wind turbine generators with one or more public data communication networks.

It is furthermore preferred that each of the plurality of wind turbine generators further comprises a hydrogen storage arrangement for storing hydrogen produced by the electrolyzer arrangement.

Hydrogen may be stored physically as either a gas or a liquid. Storage of hydrogen as a gas typically requires high-pressure tanks of 350-700 bar tank pressure, whereas storage of hydrogen as a liquid requires cryogenic temperatures. Hydrogen may also be stored on the surfaces of solids (by adsorption) or within solids (by absorption) or by using Liquid Organic Hydrogen Carriers (LOHC) or by other known means.

The local storage of hydrogen may eliminate the need for transporting the hydrogen, which will typically require pressurized tanks or piping systems in case of gaseous hydrogen. Alternatively, in liquid phase, the transport of hydrogen requires cryogenic temperatures.

It is particularly preferred that each of the plurality of wind turbine generators together with a hydrogen storage arrangement comprises an electrical power generation arrangement for converting the stored hydrogen to electrical power, and the power generation arrangement is adapted for providing direct current power to the DC-link, wherein also the power inverter is arranged for converting direct current power from the electrical power generation arrangement to alternating current power. According to a particular embodiment, the electrolyzer arrangement and the electrical power generation arrangement may be constituted by one or more stacks of regenerative or reversible fuel cells, i.e. by the same arrangement that can be operated for both purposes.

During periods where the power production from the wind farm exceeds a requested power output, e.g. to a power transmission line connecting to a power transmission grid or a power distribution grid, the electrolyzer arrangement uses the excess power to produce hydrogen which may be stored in the hydrogen storage arrangement for later power production by the electric power generation arrangement, such as fuel cells, e.g. when the marked price for electrical power makes it advantageous at peak load or for fulfilling a requirement from the transmission grid operator to deliver a prescribed amount of electric power to the grid. In particular, the wind farm may operate as a baseload power plant, which guarantees a minimum power output to the grid or a combined baseload and peak load power plant.

Thus, it is preferred that the wind farm further comprises a power transmission line for transmitting electrical power from the power inverter of each of the wind turbine generators to an electrical grid, wherein the nominal power that can be transmitted from the wind farm by means of the power transmission line constitutes no more than 65%, preferably no more than 50%, such as in the range of 15% to 40%, of the sum of the nominal capacity of the electrical generators of all wind turbine generators in the wind farm. The magnitude of the nominal power that can be transmitted from the wind farm by means of the power transmission line is often limited due to the capacity of the transmission grid that receives the power output from the wind farm, but can also be limited due to the capacity of the power transmission line of the wind farm. It is known to dimension the nominal capacity of wind farms, i.e. the sum of the nominal capacities of the electrical generators in the wind farm, to match or slightly overmatch the nominal power capacity that can be transmitted from the wind farm by means of the power transmission line.

However, it has been found by the present disclosure that by providing each of the plurality of wind turbine generators with the electrolyzer arrangement for absorbing excess produced power from the generator, the hydrogen storage arrangement for storing the energy and the electric power generation arrangement and dimensioning those correctly, it is possible to provide a wind farm where the nominal capacity of the electrical generators and thus the potential energy production from wind farm by far exceeds the limit of the nominal power capacity that can be transmitted from the wind farm by means of the power transmission line.

In a particular embodiment hereof, the nominal capacity of the power transmission line of the wind farm constitutes no more than 65%, preferably no more than 50%, such as in the range of 15% to 40%, of the sum of the nominal capacity of the electrical generators of all wind turbine generators in the wind farm.

In one embodiment of the wind farm, the plurality of wind turbine generators may comprise at least 35 wind turbine generators, such as at least 50 wind turbine generators.

In one embodiment of the wind farm, the plurality of wind turbine generators may be arranged in offshore positions.

In one embodiment of the wind farm, the sum of nominal capacity of the electrical generators of the plurality of wind turbine generators may be at least 50 MW, such as at least 250 MW for onshore wind farms and at least 500 MW, such as at least 1,000 MW for offshore farms. It should be noted that the wind farm may furthermore contain a plurality of further wind turbine generators without one or more of the components disclosed herein as part of the plurality of wind turbine generators.

### Brief description of the drawings

Various examples are described hereinafter with reference to the figures. Like reference numerals refer to like elements throughout. Like elements will not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.

An embodiment of a wind farm according to the present invention is shown in the drawings, of which:
Fig. 1 is a schematic representation of the wind farm with the internal electrical power grid and the heat recovery piping system indicated,
Fig. 2 is the schematic representation of Fig. 1 with the hydrogen piping system and the data communication network illustrated,
Fig. 3 shows the components of one of the wind turbine generators of the wind park, and
Fig. 4 shows the heat recovery arrangement of the wind turbine.

### Reference list

- 1: Wind farm
- 2: Wind turbine generator
- 3: Rotor with wind turbine blades
- 4: Electrical generator
- 5: Gearbox
- 6: Power converter
- 7: Rectifier
- 8: DC-link
- 9: Inverter
- 10: Step-up transformer
- 11: Internal power grid
- 12: Off-shore substation
- 13: Power transmission line
- 14: Onshore transmission grid
- 15: Electrolyzer arrangement
- 16: Hydrogen storage arrangement
- 16a: Hydrogen compressor
- 17: Fuel cell arrangement
- 18: Pressurised hydrogen pipeline
- 19: On-shore hydrogen receiving facility
- 20: Data processing centre
- 21: Data processing units
- 22: Data communication network
- 23: Heat recovery arrangement
- 24: Heat exchange liquid circuit
- 25: Cooling liquid
- 26: Heat recovery piping system
- 27: Cooling water feed pipe
- 28: Cooling water return pipe
- 29: Liquid-liquid heat exchanger
- 30: On-shore district heating station
- 31: Heat pump

### Detailed description

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Throughout the specification, when an element is referred to as being "connected" to another element, the element is "directly connected" to the other element, or "electrically connected" to the other element with one or more intervening elements interposed there between.

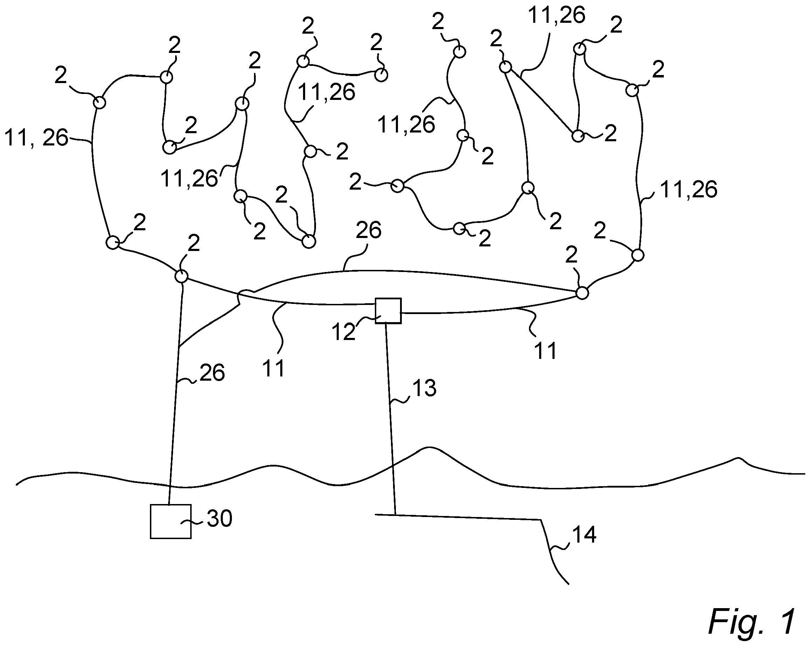

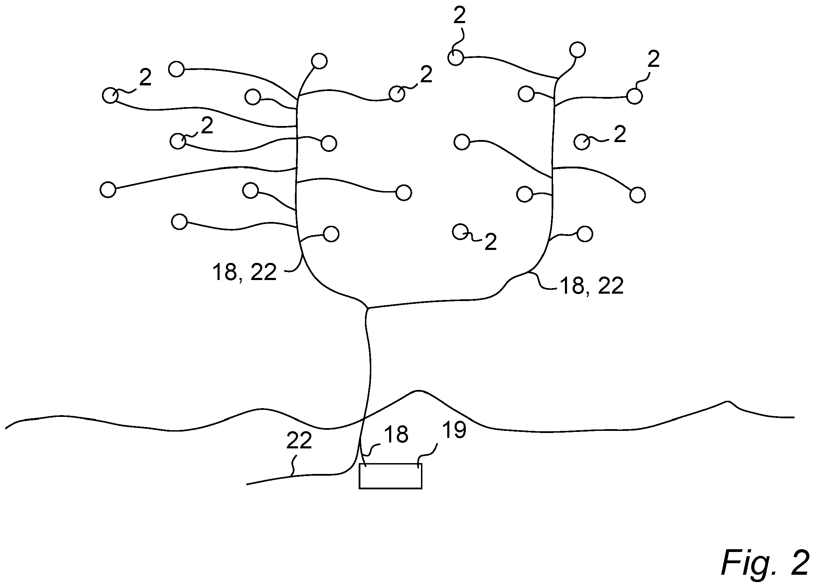

A general layout of a wind farm 1 according to the present invention is shown in Fig. 1. The wind farm comprises a plurality of offshore wind turbine generators 2, which are each, equipped with at least one rotor with wind turbine blades 3 arranged to drive an electric generator 4 via a gearbox 5, as illustrated in the embodiment of Fig.2. The generator 4 is connected to a power converter 6 comprising a rectifier 7 for rectifying the alternating-current electric power from the generator and feeding it to a DC-link 8, and an inverter 9 which converts direct-current electric power from the DC-link 8 to a constant-frequency alternating current electric power (typically 50 Hz or 60 Hz, but other frequencies such as 15 Hz or 100 Hz could be employed). The power output from the inverter 9 is transformed to a higher voltage, typically from 0.690 kV to 33 kV by means of a step-up transformer 10 at the wind turbine generator 2. The step-up transformer 10 of each wind turbine generator 2 is connected to an internal power grid 11 of the wind farm 1. An offshore substation 12 transforms the power from the internal power grid 11 to a higher voltage, such as 220 kV and transfers it via a power transmission line 13 to an onshore transmission grid 14.

Such wind farm 1 is commonly known and may comprise a number of variations to the above-disclosed details. The wind turbine generators 2 may e.g. be designed without a gearbox 5 and instead have direct drive of the generator 4 by the rotor 3, instead of full-scale conversion of the power from the generator 4 by means of the power converter 6, a doubly-fed generator 4 could be employed. In another alternative, the power transmission line 13 is a high-voltage direct current (HVDC) connection. The individual wind turbine generator 2 could comprise more than one rotor with one or more wind turbine blades 3 and a number of other well-known variations to the wind turbine generators 2 as described above could be implemented without changing the scope and nature of the present invention.

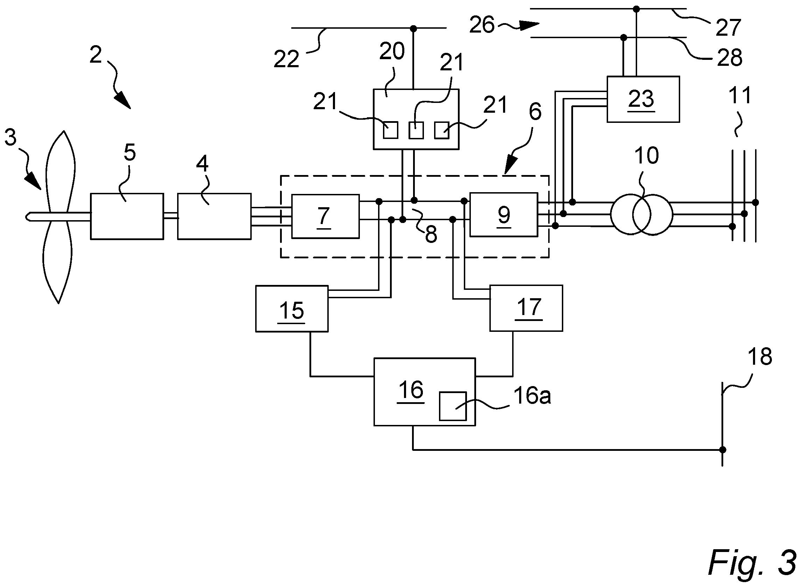

As illustrated in the embodiment of Fig. 3, each of the wind turbine generators 2 further comprises an electrolyzer arrangement 15 for production of hydrogen from electrolysis of water by means of electrical power produced by the generator 4 of the wind turbine generator 2 supplied from the DC-link 8 of the power converter 6. The hydrogen from the electrolyzer arrangement 15 is compressed to 350 bar (35 MPa) and stored in the hydrogen storage arrangement 16 of the wind turbine generator 2. A fuel cell arrangement 17 is also provided in the wind turbine generator 2, which is arranged for converting hydrogen from the hydrogen storage arrangement 16 into electrical power, which is delivered to the DC-link 8 of the power converter 6. In an alternative embodiment, the electrolyzer arrangement 15 is alternatively or additionally connected to be powered from the alternating current on one side or the other of the step-up transformer 10, whereby the electrolyzer arrangement 15 more easily can be fed with power from other wind turbine generators WTG 2 of the wind farm 1 by means of the internal power grid 11. In such case, the electrolyzer arrangement 15 will comprise an AC-DC rectifier unit.

The electrolyzer arrangement 15 comprises a number of stacks of low-temperature Proton Exchange Membrane (PEM) electrolysis cells which usually has a preferred operating temperature of about 80-100 °C. Alternative, the electrolyzer arrangement 15 comprises alkaline electrolysis cells or anion exchange membrane (AEM) electrolysis cells. Other types include high-temperature Proton Exchange Membrane (PEM) electrolysis cells which usually has a preferred operating temperature of about 150-180 °C. Another possibility is Solid Oxide Electrolysis Cell (SOEC), which has an optimal operating temperature of 700-1000 °C. The electrolyzer arrangement 15 includes other equipment necessary for operating the electrolysis stacks, such as a power conversion unit to feed the stacks of electrolyser cells with a suitable direct current, a water supply unit for feeding the stacks with deionized water, which may include a desalination apparatus for treating sea water to make it suitable for use in the electrolyser cells, temperature control arrangements for controlling the operating temperature of the stacks of electrolysis cells to be within the optimal operational temperature range, and an electrolyzer control unit for controlling the operation of the electrolyzer arrangement 15.

The fuel cell arrangement 17 comprises a number of stacks of low-temperature Proton Exchange Membrane fuel cells (PEMFC) operating preferably at temperatures around 80-100 °C. Alternatively, the fuel cell arrangement 17 comprises Alkaline Fuel Cells (AFC) or anion exchange membrane fuel cells (AEMFC), also known as alkaline anion exchange membrane fuel cell (AAEMFC), alkaline membrane fuel cells (AMFC), hydroxide exchange membrane fuel cells (HEMFC), or solid alkaline fuel cells (SAFC). Yet another alternative is Solid Oxide Fuel Cell (SOFC). The fuel cell arrangement 17 includes other equipment necessary for operating the fuel cell stacks, such as a power conversion unit for feeding the power produced by the stacks of fuel cells to the DC-link 8 with a suitable voltage, temperature control arrangements for controlling the operating temperature of the stacks of fuel cells to be within the optimal operational temperature range, and a fuel cell control unit for controlling the operation of the fuel cell arrangement 17.

Alternative means for storing the produced hydrogen may be incorporated, such as using Liquid Organic Hydrogen Carriers (LOHC) or other well-known storage means. The use of LOHC may be advantageous because the hydrogen can be stored at ambient temperature and pressure and because the problems of storage of gaseous hydrogen, such as deterioration of materials in contact with the hydrogen by embrittlement and corrosion and risk of leakage are generally solved by the LOHC.

Other means for electrical power generation from the stored hydrogen, as an alternative to the fuel cell arrangement 17 could e.g. include an internal combustion engine, such as a piston engine or a gas turbine coupled to an electrical generator.

The electrolyzer arrangement 15 and the fuel cell arrangement 17 may in certain embodiments be one and the same set of regenerative or reversible fuel cells 15, 17, which may be operated as electrolyzers as well as fuel cells. One example is Solid Oxide Electrolysis Cell (SOEC), which is a reversely operated Solid Oxide Fuel Cell (SOFC), also named a Solid Oxide Regenerative Fuel Cell (SORFC). Such a cell operates at relatively high temperatures (700-1000 °C), which makes the efficiency very high. The hydrogen generated in the reversible fuel cells 15, 17 can be stored and reconverted into electricity again by means of the same reversible fuel cells 15, 17, such as Solid Oxide Regenerative Fuel Cell (SORFC). Alternative options for reversible fuel cells are e.g. alkaline fuel cells (AFC) and PEM fuel cells.

The wind farm 1 may be provided with a pressurised hydrogen pipeline 18 that connects the hydrogen storage arrangement 16 of each of the wind turbine generators 2 with an on-shore hydrogen receiving facility 19. The hydrogen may be distributed from the on-shore hydrogen receiving facility 19 to various use, be converted into electro fuels, such as butanol, butane or methane, or be stored chemically, such as in LOHC.

Alternatively, the hydrogen collected from the wind turbine generators 2 may be converted to electro fuel at processing plants arranged offshore at the individual wind turbine generator 2 or at offshore processing plants common for a number of the wind turbine generators 2.

The hydrogen may alternatively be conveyed from the wind turbine generators 2 to the on-shore hydrogen receiving facility 19 or to an off-shore processing plant by means of a two-string hydrogen piping system (not shown). The hydrogen piping system may comprise a LOHC feed pipe arranged for supplying dehydrogenated LOHC to each individual wind turbine generator 2 and a LOHC return pipe arranged for receiving hydrogenated LOHC from the wind turbine generator 2.

Each of the wind turbine generators 2 is furthermore equipped with a data processing centre 20 having a plurality of data processing units 21 connected to a data communication network 22 of the wind farm 1 and being configured to receive, process, store and transmit data by means of the data processing network 22. The data processing centre 20 is arranged to be powered from the DC-link 8 of the power converter 6 where the power is obtained from the electrical generator 4 or from the fuel cell arrangement 17, depending on the state of operation of the wind turbine generator 2. In an alternative embodiment, the data processing centre 20 is alternatively or additionally connected to be powered from the alternating current on one side or the other of the step-up transformer 10, whereby the data processing centre 20 more easily can be fed with power from other wind turbine generators WTG 2 of the wind farm 1 by means of the internal power grid 11. In such case, the data processing centre 15 will comprise an AC-DC rectifier unit.

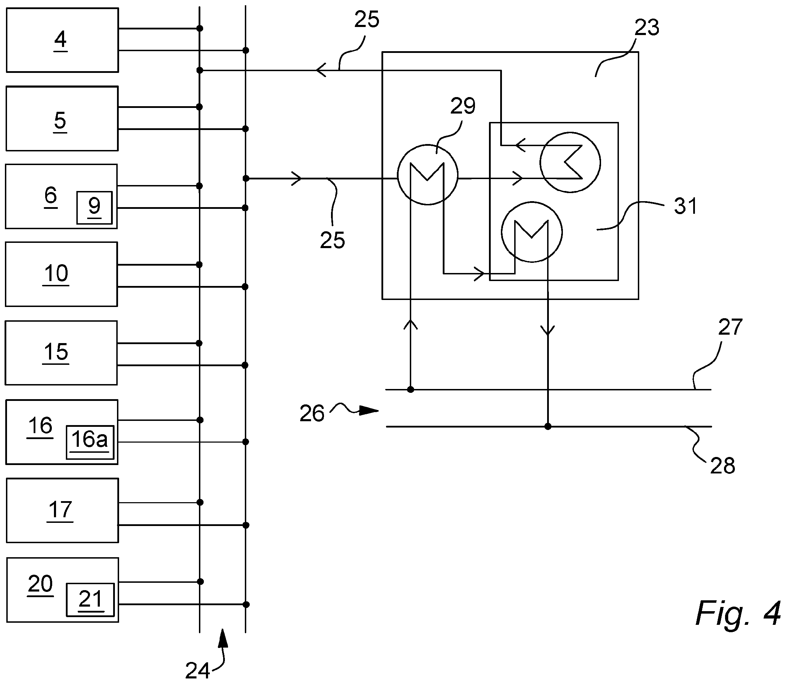

Fig. 4 illustrates one embodiment of the wind turbine generators 2, which is provided with a heat recovery arrangement 23. The illustrated heat recovery arrangement 23 comprises a heat exchange liquid circuit 24 that provides a cooling liquid 25 to the electrical generator 4, the gearbox 5, the power converter 6, where in particular the inverter 9 is in need of cooling off waste heat, the step-up transformer 10, the electrolyzer arrangement 15, the compressor 16a of the hydrogen storage arrangement 16, the fuel cell arrangement 17 and the data processing centre 20, each of which either comprises a heat exchanger for exchanging heat between an internal cooling system of the component and the cooling liquid 25 or uses the cooling liquid 25 directly for cooling of the component 4, 5, 6, 9, 10, 15, 16, 16a, 17, 20. The cooling liquid 25 is heated in the components 4, 5, 6, 9, 10, 15, 16, 16a, 17, 20 by absorbing the waste heat from those components 4, 5, 6, 9, 10, 15, 16, 16a, 17, 20 and is returned to the heat recovery arrangement 23. According to Fig. 4, the heat recovery arrangement 23 is connected to the AC side of the inverter 9 to obtain operating power from the three AC phases. Alternatively, the heat recovery arrangement 23 could be connected to one phase and a neutral conductor or it could be connected to be fed by power from the DC-link 8.

The wind farm 1 is provided with a heat recovery piping system 26 connecting each of the wind turbine generators 2 with a cooling water feed pipe 27 arranged for supplying cooling water to the heat recovery arrangement 23 of the wind turbine generator 2 and a cooling water return pipe 28 arranged for receiving heated water from the heat recovery arrangement 23. The cooling liquid 25 returned from the components 4, 5, 6, 9, 10, 15, 16, 16a, 17, 20 passes through a liquid-liquid heat exchanger 29 in the heat recovery arrangement 23 and delivers the waste heat to the cooling water from the cooling water feed pipe 27, and the heated cooling water is directed to the cooling water return pipe 28.

The temperature control arrangements of the electrolyzer arrangement 15 and the temperature control arrangements of the fuel cell arrangements 17 employs the heat recovery arrangement 23 to provide heating or cooling to the stacks of electrolysis cells and stacks of fuel cells, respectively, dependent on the operational mode. At start-up of operation of the stacks of cells, the temperature control arrangements are operated to heat the stacks of cells, preferably to reach their optimal operational temperature range or at least bring them close to that temperature range, and during operation of the stacks of cells, temperature control arrangements are operated to maintain the temperature of the stacks of cells within their optimal temperature range by means of heating or cooling the stacks.

The cooling water return pipe 28 is connected to an on-shore district heating station 30 where the recovered waste heat from the wind farm 1 is transferred to a district heating system. Depending on the geographical location of heating demand on-shore, the heat recovery piping system 26 may be connected to more than one on-shore district heating station 30 in order to distribute the heat to more positions. Also, the recovered waste heat from the heat recovery piping system 26 may additionally or alternatively be employed to produce electrical power by means of e.g. a Sterling motor or an Organic Rankine Cycle driving an electrical generator or for desalination of seawater, such as by means of a Multiple-Effect Desalination (MED) plant.

The cooling water feed pipe 27 may also be applied to supply water of a sufficient purity to the electrolyzer arrangement 15, such as deionized water or water that easily can be purified to a sufficient degree for the electrolyzer arrangement 15 at the wind turbine generator 2. Alternatively or additionally, the wind turbine generator 2 may be provided with a desalination arrangement (not shown) for providing a supply of water suitable for the electrolyzer arrangement 15.

The heat recovery arrangement 23 of the wind turbine generator 2 is also provided with a heat pump 31 which is applied for increasing the temperature of cooling water before it is directed to the cooling water return pipe 28 using the cooling liquid 25 as a heat source after it has passed the liquid-liquid heat exchanger 29. Hereby, the cooling effect of the cooling liquid 25 is enhanced while the exit temperature of the cooling water delivered to the cooling water return pipe 28 can be elevated to e.g. 80 - 125 °C, which is preferable for some types of district heating systems or for alternative use of the returned cooling water. Alternatively, the flow of cooling water from cooling water feed pipe 27 may be increased, both alternatives increases the usable heat flow from the wind turbine generator 2. The heat pump 31 is also arranged for heating of cooling water from the cooling water feed pipe 27 using sea water (not shown) as a heat source for use in operational situations where the demand for heat flow from the cooling water returned from the wind turbine generator 2 by the cooling water return pipe 28 cannot be met by the waste heat recovered from the components 4, 5, 6, 9, 10, 15, 16, 16a, 17, 20 of the wind turbine generator 2 by the heat recovery arrangement 23, such as in periods of low wind and/or high demands from the district heating or other consumers of the heat received from the cooling water returned by the cooling water return pipe 28. In case the demand of heat exceeds the recovered waste heat in periods of low wind, the fuel cell arrangement 17 may be operated to produce sufficient electrical power to operate the heat pump 31 if necessary.

In variations of embodiments of the present invention, some parts and components of the wind turbine generators 2 of the wind park may be omitted or switched with similar components without changing the invention as disclosed herein. The wind park 1 may furthermore contain a plurality of further wind turbine generators without one or more of the components disclosed herein. In particular, the electrolyzer arrangement 15 of each of the plurality of wind turbine generators 2 may furthermore be employed for converting electrical power generated by other wind turbine generators 2 of the wind park 1 with or without its own electrolyzer arrangement 15 into hydrogen.

The power consumption arrangements of each of the wind turbine generators 2 in the form of electrolyzer arrangements 15 and/or data processing centres 20 may furthermore be employed for reducing the power output delivered to the onshore transmission grid 14 during temporal reduction in the power requirements thereof, e.g. during grid failures, by consuming a larger portion of the generated power by the wind turbine generators 2 of the wind farm 1.

The heat pump may also be adapted for heating of cooling water from the cooling water feed pipe using sea water as a heat source in operational situations, where the demand for heat flow from the cooling water returned from the wind turbine generator 2 by the cooling water return pipe 28 cannot be met by the waste heat recovered from the components 4, 5, 6, 9, 10, 16, 16a, 17 of the wind turbine generator 2 by the heat recovery arrangement 23, such as in periods of low wind and/or high demands from the district heating or other consumers of the heat received from the cooling water returned by the cooling water return pipe 28.

## Claims

1. A wind farm (1) comprising a plurality of wind turbine generators (2), each of which comprises
a rotor (3) having one or more blades,
an electrical generator (4) driven by said rotor (3) for converting rotation thereof into electrical power,
a rectifier (7) for converting alternating current power from the electrical generator (4) to direct current power,
a power inverter (9) for converting direct current power from the rectifier (7) to alternating current power, and
a DC-link (8) connecting the rectifier (7) and the power inverter (9),
wherein each of the plurality of wind turbine generators (2) further comprises
an electrolyzer arrangement (15) for production of hydrogen arranged for using electrical power from the generator (4), wherein the electrolyzer arrangement (15) is adapted for being powered by direct current power from the DC-link (8), or
a data processing centre (20) having one or more data processing units (21) connected to a data communication network (22) and configured to receive, process, store, and transmit data over the data communication network (22), wherein the data processing centre (20) is arranged for being powered by obtaining direct current power from the DC-link (8), and wherein the nominal power capacity of the power inverter (9) constitutes no more than 65%, preferably no more than 50%, such as in the range of 15% to 40%, of the nominal power capacity of the electrical generator (4) of that wind turbine generator (2).

2. The wind farm according to claim 1, wherein each of the plurality of wind turbine generators (2) comprises
an electrolyzer arrangement (15) for production of hydrogen arranged for using electrical power from the generator (4), wherein the electrolyzer arrangement (15) is adapted for being powered by direct current power from the DC-link (8), and
a data processing centre (20) having one or more data processing units (21) connected to a data communication network (22) and configured to receive, process, store, and transmit data over the data communication network (22), wherein the data processing centre (20) is arranged for being powered by obtaining direct current power from the DC-link (8),
wherein the nominal power capacity of the power inverter (9) constitutes no more than 40%, preferably no more than 30%, such as in the range of 10 to 25%, of the nominal power capacity of the electrical generator (4) of that wind turbine generator (2).

3. The wind farm according to any of claims 1 and 2, with claim 1 comprising a data processing centre, wherein the maximal power consumption of the data processing centre (20) constitutes at least 10%, such as at least 30% or even more than 50% of the nominal power capacity of the electrical generator (4) of that wind turbine generator (2).

4. The wind farm according to any of the preceding claims, with claim 1 comprising a data processing centre, further comprising a data communication network (22) connecting the data processing centres (20) of each of the plurality of wind turbine generators (2) with one or more public data communication networks.

5. The wind farm (1) according to any of claims 1, 2 and 4, with claim 1 comprising an electrolyzer arrangement, wherein each of the plurality of wind turbine generators (2) further comprises a hydrogen storage arrangement (16) for storing hydrogen produced by the electrolyzer arrangement (15).

6. The wind farm (1) according to claim 5, wherein each of the plurality of wind turbine generators (2) further comprises
an electrical power generation arrangement (17) for converting the stored hydrogen to electrical power, and the power generation arrangement (17) is adapted for providing direct current power to the DC-link (8), wherein the power inverter (9) furthermore is arranged for converting direct current power from the electrical power generation arrangement (17) to alternating current power.

7. The wind farm (1) according to any of the preceding claims, further comprising a power transmission line (13) for transmitting electrical power from the power inverter (9) of each of the wind turbine generators (2) to an electrical grid (14),
wherein the nominal power that can be transmitted from the wind farm (1) by means of the power transmission line (13) constitutes no more than 65%, preferably no more than 50%, such as in the range of 15% to 40%, of the sum of the nominal capacity of the electrical generators (4) of all wind turbine generators (2) in the wind farm (1).

8. The wind farm (1) according to claim 7, wherein the nominal power capacity of the power transmission line (13) constitutes no more than 65%, preferably no more than 50%, such as in the range of 15% to 40%, of the sum of the nominal capacity of the electrical generators (4) of all wind turbine generators (2) in the wind farm (1).

9. The wind farm (1) according to any of the preceding claims, wherein said plurality of wind turbine generators (2) comprises at least 35 wind turbine generators (2), such as at least 50 wind turbine generators (2).

10. The wind farm (1) according to any of the preceding claims, wherein said plurality of wind turbine generators (2) are arranged in offshore positions.

11. The wind farm (1) according to any of the preceding claims, wherein the sum of nominal capacity of the electrical generators (4) of said plurality of wind turbine generators (2) is at least 50 MW, such as at least 250 MW for onshore wind farms and at least 500 MW, such as at least 1,000 MW for offshore farms.

## Patentansprüche

1. Windfarm (1), eine Vielzahl von Windturbinengeneratoren (2) umfassend, die jeweils Folgendes umfassen:
einen Rotor (3), der ein oder mehrere Blätter aufweist,
einen elektrischen Generator (4), der durch den Rotor (3) angetrieben wird, zum Umwandeln einer Rotation davon in elektrische Leistung,
einen Gleichrichter (7) zum Umwandeln von Wechselstromleistung von dem elektrischen Generator (4) in Gleichstromleistung,
einen Leistungswechselrichter (9) zum Umwandeln von Gleichstromleistung von dem Gleichrichter (7) in Wechselstromleistung und
einen DC-Zwischenkreis (8), der den Gleichrichter (7) und den Leistungswechselrichter (9) verbindet,
wobei jeder der Vielzahl von Windturbinengeneratoren (2) ferner Folgendes umfasst:
eine Elektrolyseur-Anordnung (15) zur Produktion von Wasserstoff, die zum Verwenden von elektrischer Leistung von dem Generator (4) angeordnet ist, wobei die Elektrolyseur-Anordnung (15) dazu ausgelegt ist, durch Gleichstromleistung von dem DC-Zwischenkreis (8) mit Leistung versorgt zu werden, oder
ein Datenverarbeitungszentrum (20) mit einer oder mehreren Datenverarbeitungseinheiten (21), das mit einem Datenkommunikationsnetzwerk (22) verbunden ist und dazu konfiguriert ist, Daten zu empfangen, zu verarbeiten, zu speichern und über das Datenkommunikationsnetzwerk (22) zu übertragen, wobei das Datenverarbeitungszentrum (20) so angeordnet ist, dass es durch Erhalten von Gleichstromleistung von dem DC-Zwischenkreis (8) mit Leistung versorgt wird, und
wobei die Nennleistungskapazität des Leistungswechselrichters (9) nicht mehr als 65 %, bevorzugt nicht mehr als 50 %, wie etwa im Bereich von 15 % bis 40 %, der Nennleistungskapazität des elektrischen Generators (4) dieses Windturbinengenerators (2) ausmacht.

2. Windfarm nach Anspruch 1, wobei jeder der Vielzahl von Windturbinengeneratoren (2) Folgendes umfasst:
eine Elektrolyseur-Anordnung (15) zur Produktion von Wasserstoff, die zum Verwenden von elektrischer Leistung von dem Generator (4) angeordnet ist, wobei die Elektrolyseur-Anordnung (15) dazu ausgelegt ist, durch Gleichstromleistung von dem DC-Zwischenkreis (8) mit Leistung versorgt zu werden, und
ein Datenverarbeitungszentrum (20) mit einer oder mehreren Datenverarbeitungseinheiten (21), das mit einem Datenkommunikationsnetzwerk (22) verbunden ist und dazu konfiguriert ist, Daten zu empfangen, zu verarbeiten, zu speichern und über das Datenkommunikationsnetzwerk (22) zu übertragen, wobei das Datenverarbeitungszentrum (20) so angeordnet ist, dass es durch Erhalten von Gleichstromleistung von dem DC-Zwischenkreis (8) mit Leistung versorgt wird,
wobei die Nennleistungskapazität des Leistungswechselrichters (9) nicht mehr als 40 %, bevorzugt nicht mehr als 30 %, wie etwa im Bereich von 10 bis 25 %, der Nennleistungskapazität des elektrischen Generators (4) dieses Windturbinengenerators (2) ausmacht.

3. Windfarm nach einem der Ansprüche 1 und 2, wobei Anspruch 1 ein Datenverarbeitungszentrum umfasst, wobei die maximale Leistungsaufnahme des Datenverarbeitungszentrums (20) mindestens 10 %, wie etwa mindestens 30 % oder sogar mehr als 50 % der Nennleistungskapazität des elektrischen Generators (4) dieses Windturbinengenerators (2) ausmacht.

4. Windfarm nach einem der vorhergehenden Ansprüche, wobei Anspruch 1 ein Datenverarbeitungszentrum umfasst, ferner ein Datenkommunikationsnetzwerk (22) umfassend, das die Datenverarbeitungszentren (20) jedes der Vielzahl von Windturbinengeneratoren (2) mit einem oder mehreren öffentlichen Datenkommunikationsnetzwerken verbindet.

5. Windfarm (1) nach einem der Ansprüche 1, 2 und 4, wobei Anspruch 1 eine Elektrolyseur-Anordnung umfasst, wobei jeder der Vielzahl von Windturbinengeneratoren (2) ferner eine Wasserstoffspeicheranordnung (16) zum Speichern von Wasserstoff, der durch die Elektrolyseur-Anordnung (15) produziert wird, umfasst.

6. Windfarm (1) nach Anspruch 5, wobei jeder der Vielzahl von Windturbinengeneratoren (2) ferner Folgendes umfasst:
eine elektrische Leistungserzeugungsanordnung (17) zum Umwandeln des gespeicherten Wasserstoffs in elektrische Leistung, und die Leistungserzeugungsanordnung (17) dazu ausgelegt ist, Gleichstromleistung dem DC-Zwischenkreis (8) bereitzustellen, wobei der Leistungswechselrichter (9) ferner so angeordnet ist, dass er Gleichstromleistung von der elektrischen Leistungserzeugungsanordnung (17) in Wechselstromleistung umwandelt.

7. Windfarm (1) nach einem der vorhergehenden Ansprüche, ferner eine Leistungsübertragungsleitung (13) zum Übertragen von elektrischer Leistung von dem Leistungswechselrichter (9) jedes der Windturbinengeneratoren (2) an ein elektrisches Netz (14) umfassend,
wobei die Nennleistung, die von der Windfarm (1) mittels der Leistungsübertragungsleitung (13) übertragen werden kann, nicht mehr als 65 %, bevorzugt nicht mehr als 50 %, wie etwa im Bereich von 15 % bis 40 %, der Summe der Nennkapazität der elektrischen Generatoren (4) aller Windturbinengeneratoren (2) in der Windfarm (1) ausmacht.

8. Windfarm (1) nach Anspruch 7, wobei die Nennleistungskapazität der Leistungsübertragungsleitung (13) nicht mehr als 65 %, bevorzugt nicht mehr als 50 %, wie etwa im Bereich von 15 % bis 40 %, der Summe der Nennkapazität der elektrischen Generatoren (4) aller Windturbinengeneratoren (2) in der Windfarm (1) ausmacht.

9. Windfarm (1) nach einem der vorhergehenden Ansprüche, wobei die Vielzahl von Windturbinengeneratoren (2) mindestens 35 Windturbinengeneratoren (2) umfasst, wie etwa mindestens 50 Windturbinengeneratoren (2).

10. Windfarm (1) nach einem der vorhergehenden Ansprüche, wobei die Vielzahl von Windturbinengeneratoren (2) an Offshore-Positionen angeordnet sind.

11. Windfarm (1) nach einem der vorhergehenden Ansprüche, wobei die Summe der Nennkapazität der elektrischen Generatoren (4) der Vielzahl von Windturbinengeneratoren (2) mindestens 50 MW, wie etwa mindestens 250 MW, für Onshore-Windfarmen und mindestens 500 MW, wie etwa mindestens 1.000 MW, für Offshore-Farmen beträgt.

## Revendications

1. Parc éolien (1) comprenant une pluralité de générateurs d'éolienne (2), dont chacun comprend
un rotor (3) ayant une ou plusieurs pales,
un générateur électrique (4) entraîné par ledit rotor (3) pour convertir sa rotation en énergie électrique,
un redresseur (7) pour convertir l'alimentation en courant alternatif du générateur électrique (4) en une alimentation en courant continu,
un onduleur de puissance (9) pour convertir le courant continu du redresseur (7) en courant alternatif, et
une liaison CC (8) connectant le redresseur (7) et l'onduleur de puissance (9),
dans lequel chacun de la pluralité de générateurs d'éolienne (2) comprend en outre
un agencement électrolyseur (15) pour la production d'hydrogène conçu pour utiliser l'énergie électrique du générateur (4), dans lequel l'agencement électrolyseur (15) est adapté pour être alimenté par une alimentation en courant continu provenant de la liaison CC (8), ou
un centre de traitement de données (20) ayant une ou plusieurs unités de traitement de données (21) connectées à un réseau de communication de données (22) et configurées pour recevoir, traiter, stocker et transmettre des données sur le réseau de communication de données (22), dans lequel le centre de traitement de données (20) est conçu pour être alimenté en obtenant une alimentation en courant continu provenant de la liaison CC (8) et dans lequel la capacité de puissance nominale de l'onduleur de puissance (9) ne constitue pas plus de 65 %, de préférence pas plus de 50 %, par exemple dans la plage allant de 15 % à 40 %, de la capacité de puissance nominale du générateur électrique (4) de ce générateur d'éolienne (2).

2. Parc éolien selon la revendication 1, dans lequel chacun de la pluralité de générateurs d'éolienne (2) comprend
un agencement électrolyseur (15) pour la production d'hydrogène conçu pour utiliser l'énergie électrique du générateur (4), dans lequel l'agencement électrolyseur (15) est adapté pour être alimenté par une alimentation en courant continu provenant de la liaison CC (8), et
un centre de traitement de données (20) ayant une ou plusieurs unités de traitement de données (21) connectées à un réseau de communication de données (22) et configurées pour recevoir, traiter, stocker et transmettre des données sur le réseau de communication de données (22), dans lequel le centre de traitement de données (20) est conçu pour être alimenté en obtenant une alimentation en courant continu provenant de la liaison CC (8),
dans lequel la capacité de puissance nominale de l'onduleur de puissance (9) ne constitue pas plus de 40 %, de préférence pas plus de 30 %, par exemple dans la plage allant de 10 % à 25 %, de la capacité de puissance nominale du générateur électrique (4) de ce générateur d'éolienne (2).

3. Parc éolien selon l'une quelconque des revendications 1 et 2, la revendication 1 comprenant un centre de traitement de données, dans lequel la consommation électrique maximale du centre de traitement de données (20) constitue au moins 10 %, par exemple au moins 30 % ou même plus de 50 % de la capacité de puissance nominale du générateur électrique (4) de ce générateur d'éolienne (2).

4. Parc éolien selon l'une quelconque des revendications précédentes, la revendication 1 comprenant un centre de traitement de données, comprenant en outre un réseau de communication de données (22) connectant les centres de traitement de données (20) de chacun de la pluralité de générateurs d'éolienne (2) avec un ou plusieurs réseaux publics de communication de données.

5. Parc éolien (1) selon l'une quelconque des revendications 1, 2 et 4, la revendication 1 comprenant un agencement électrolyseur, dans lequel chacun de la pluralité de générateurs d'éolienne (2) comprend en outre un agencement de stockage d'hydrogène (16) pour stocker l'hydrogène produit par l'agencement électrolyseur (15).

6. Parc éolien (1) selon la revendication 5, dans lequel chacun de la pluralité de générateurs d'éolienne (2) comprend en outre
un agencement de génération d'énergie électrique (17) pour convertir l'hydrogène stocké en énergie électrique, et l'agencement de génération d'énergie (17) est adapté pour fournir une alimentation en courant continu à la liaison CC (8), dans lequel l'onduleur de puissance (9) est en outre conçu pour convertir l'alimentation en courant continu provenant de l'agencement de génération d'énergie électrique (17) en une alimentation en courant alternatif.

7. Parc éolien (1) selon l'une quelconque des revendications précédentes, comprenant en outre une ligne de transmission d'énergie (13) pour transmettre l'énergie électrique depuis l'onduleur de puissance (9) de chacun des générateurs d'éolienne (2) vers un réseau électrique (14),
dans lequel la puissance nominale qui peut être transmise depuis le parc éolien (1) au moyen de la ligne de transmission d'énergie (13) ne constitue pas plus de 65 %, de préférence pas plus de 50 %, par exemple dans la plage allant de 15 % à 40 %, de la somme de la capacité nominale des générateurs électriques (4) de tous les générateurs d'éolienne (2) dans le parc éolien (1) .

8. Parc éolien (1) selon la revendication 7, dans lequel la capacité de puissance nominale de la ligne de transmission d'énergie (13) ne constitue pas plus de 65 %, de préférence pas plus de 50 %, par exemple dans la plage allant de 15 % à 40 %, de la somme de la capacité nominale des générateurs électriques (4) de tous les générateurs d'éolienne (2) du parc éolien (1).

9. Parc éolien (1) selon l'une quelconque des revendications précédentes, dans lequel ladite pluralité de générateurs d'éolienne (2) comprend au moins 35 générateurs d'éolienne (2), par exemple au moins 50 générateurs d'éolienne (2).

10. Parc éolien (1) selon l'une quelconque des revendications précédentes, dans lequel ladite pluralité de générateurs d'éolienne (2) sont disposés dans des positions offshore.

11. Parc éolien (1) selon l'une quelconque des revendications précédentes, dans lequel la somme de la capacité nominale des générateurs électriques (4) de ladite pluralité de générateurs d'éolienne (2) est d'au moins 50 MW, par exemple au moins 250 MW pour les parcs éoliens onshore et au moins 500 MW, par exemple au moins 1 000 MW pour les parcs offshore.
